# EUROPÄISCHE PATENTSCHRIFT

(11) **EP 2 540 202 B1**
(45) Veröffentlichungstag und Bekanntmachung des Hinweises auf die Patenterteilung: **26.09.2018**
(21) Anmeldenummer: 12174022.9
(22) Anmeldetag: 28.06.2012
(51) Int. Cl.: A47K 3/40, E03C 1/284, E03F 5/04

(54) **Duschbodenelement**
Shower floor element
Elément de sol de douche

(30) Priorität: 28.06.2011 DE 202011102926 U; 11.01.2012 DE 202012100083 U; 07.03.2012 DE 202012100808 U; 21.05.2012 DE 102012104347
(43) Veröffentlichungstag der Anmeldung: 02.01.2013
(73) Patentinhaber: poresta systems GmbH, 34537 Bad Wildungen (DE)
(72) Erfinder: Michel, Andreas, 34549 Edertal (DE); Wagenfeldt, Jens, 34537 Bad Wildungen (DE); Iglhaut, Karl, Dr., 34560 Fritzlar (DE); Rummel, Lars, 34513 Waldeck (DE); Schönberger-Messer, Heinz-Joachim, 61389 Schmitten (DE)
(74) Vertreter: Müller, Enno

(56) Entgegenhaltungen:
- WO-A1-2010/026088
- WO-A1-2010/100556
- DE-U1-202008 015 899
- FR-A1- 2 928 156

## Beschreibung

Die Erfindung betrifft ein Duschbodenelement nach den Merkmalen des Oberbegriffes des Anspruches 1.

Derartige Duschbodenelemente sind bereits in verschiedener Hinsicht bekannt geworden. Es wird beispielsweise auf die WO 2010/026 088 A1 und die EP 2 227 997 A1 verwiesen.

Weiter ist zum Stand der Technik auf die FR 2928156 A1, die WO 2010/100556 A1 und die DE 202008015899 U1 zu verweisen.

Bei den Gegenständen der genannten Druckschriften ist zwar (FR 2928156 A1) ein Ablauftopf mit einer größeren Länge als Breite vorgesehen, jedoch ist der Raumbedarf im Hinblick auf den sich anschließenden Geruchsverschluss und die Ablaufleitung vergleichsweise groß.

Ausgehend von dem vorgenannten Stand der Technik beschäftigt sich die Erfindung mit der Aufgabenstellung, ein Duschbodenelement der genannten Art anzugeben, das einen möglichst kompakten Aufbau ermöglicht.

Diese Aufgabe ist beim Gegenstand des Anspruches 1 gelöst, wobei darauf abgestellt ist, dass die im Anschluss an den Geruchsverschluss vorgesehene Ablaufleitung bzw. ein diesbezüglicher Leitungsabschnitt in einer Draufsicht mit einer Erstreckungsrichtung in einem rechten oder spitzen Winkel zur Durchflussrichtung des Geruchsverschlusses angeordnet ist und dass der Geruchsverschluss über eine sich in einer Längserstreckung der Ablaufleitung erstreckende Mündung in die Ablaufleitung übergeht, wobei eine Öffnung der Mündung in Längserstreckung der Ablaufleitung größer ist als ein Durchmesser der Ablaufleitung.

Ein solches Duschbodenelement ermöglicht einen flachbauenden Geruchsverschluss. Über die Breite kann auch bei vergleichsweise geringer Höhe eine große Abflussmenge den Geruchsverschluss durchsetzen. Dadurch, dass die Ablaufleitung im Anschluss an den Geruchsverschluss mit einem Winkel verläuft, nämlich einem rechten oder spitzen Winkel zur Durchflussrichtung des Geruchsverschlusses, kann gleichwohl ein vergleichsweise kompakt bauendes Duschbodenelement gebildet werden. Die in Längsrichtung der Ablaufleitung mit größerer Erstreckung als ein Durchmesser der Ablaufleitung ausgebildete Mündung lässt eine langgestreckte Einmündung in die Ablaufleitung erreichen. Es hat sich gezeigt, dass bei einer solchen Gestaltung eine bezüglich einer Längsachse der Ablaufleitung in der Ablaufleitung rotierende Ablaufströmung erreichbar ist. Es werden auch günstige Durchflusswerte erreicht, die auf diesen Effekt - mit - zurückgeführt werden. Insbesondere ist eine tangentiale, dem oberen Durchmesserbereich zugeordnete Einströmung bevorzugt. Insbesondere hierdurch lässt sich erreichen, dass die Strömung in einen Wirbel oder Rotor in der beschriebenen Art übergeht.

Die kompakte Ausbildung ist auch durch einen Anschluss des Geruchsverschlusses an einer Längsseite des Ablauftopfes, der einen rechteckigen Grundriss aufweist, gegeben. Bevorzugt ist auch der Abfluss entfernt von einem Endbereich der Ablaufrinne bzw. der Aufnahme vorgesehen. Weiter bevorzugt ist der Abfluss und entsprechend auch der Ablauftopf mittig bezüglich der Länge der Ablaufrinne, ggf. einer Aufnahme für eine Ablaufrinne, vorgesehen. Eine in den Geruchsverschluss überleitende Abflussöffnung in dem Ablauftopf ist bevorzugt mit einer Breite ausgebildet, die bereits der Breite des den zumindest teilweise außerhalb des Ablauftopfes vorgesehenen Geruchsverschluss bildenden Leitungsabschnittes angepasst ist oder günstig in diese Breite überleitet. Die Dimension der Einmündung in Erstreckungsrichtung der Ablaufleitung entspricht bevorzugt der Breite des Leitungsabschnittes zwischen der Rinne bzw. der Aufnahme der Rinne und der Ablaufleitung. Dieser Leitungsabschnitt erbringt wie beschrieben auch einen Teil des Geruchsverschlusses. Das Einströmen in die Ablaufleitung erfolgt damit im Wesentlichen quer zur Längsachse der Ablaufleitung. Eine gute Durchströmung des Geruchsverschlusses kann erreicht werden. Es ist auch ein günstiger mechanischer Anschluss an die Ablaufleitung erreichbar, für den Fall, dass die Ablaufleitung nicht einteilig mit dem Geruchsverschluss hergestellt wird. Beispielsweise kann eine Verklebung oder Verschweißung vorgenommen werden. Durch den langen Anschlussbereich ist eine feste Verbindung möglich. Trotz bevorzugt rechtwinkeliger Anordnung der Ablaufleitung zu der Erstreckungsrichtung des in Strömungsrichtung vorgeschalteten Geruchsverschlusses ist die Gefahr, dass Hebelkräfte die Verbindung lösen können, reduziert.

Unabhängig oder ergänzend zu obiger Charakterisierung ist die Einmündung oberhalb, oder mehrheitlich oder im Wesentlichen oberhalb, bezogen auf einen Querschnitt durch die Ablaufleitung, einer Mittelebene oder Mittelachse der Ablaufleitung gegeben.

Die Länge des Ablauftopfes ist im Falle einer Ablaufrinne bevorzugt sich in Längsrichtung der Ablaufrinne erstreckend vorgesehen.

Bevorzugt ist auch, dass die innerhalb des Duschbodenelementes angeordnete und strömungsmäßig an den Geruchsverschluss anschließende Ablaufleitung in Abschnitte unterschiedlicher Richtung aufgeteilt ist, die sich innerhalb des Duschbodenelementes erstrecken und zu unterschiedlichen Randkanten des Duschbodenelementes hin gerichtet ist. Es sind im Hinblick auf über den genannten Ablauftopf ablaufendes Abwasser alternativ nutzbare Ablaufleitungen bzw. Abschnitte einer solchen Leitung, bevorzugt bereits werksmäßig, hierfür vorgesehen. Bei der Montage und dem Anschluss der Ablaufleitung vor Ort kann einer dieser Leitungsabschnitte zur tatsächlichen Ausbildung der Ablaufleitung genutzt werden. Der andere Abschnitt ist dann betrieblich unbenutzt in dem Duschbodenelement vorhanden. Er kann aber auch in einem besonderen Fall, wie weiter unten noch erläutert, gleichfalls genutzt sein. Bei einem dieser mehreren Leitungsabschnitte handelt es sich gleichsam um einen "verlorenen" Leitungsabschnitt, der aber zur Universalität hinsichtlich der Anschlussmöglichkeiten an eine Gebäude-Ablaufleitung bei einem solchen Duschbodenelement beiträgt. Einer der Leitungsabschnitte verbleibt entsprechend betrieblich bevorzugt ohne Durchströmung, kann aber gleichwohl derart angeschlossen verbleiben, dass sich ein gewisser Wasserstand in diesem Abschnitt bei Benutzung ergibt.

In diesem Zusammenhang ist es auch bevorzugt, dass eine oder weitere bevorzugt beide Leitungsabschnitte herstellungsmäßig endverschlossen sind. Nur der tatsächlich genutzte Leitungsabschnitt muss dann geöffnet werden. Etwa durch Abschneiden. Hierzu ist weiter bevorzugt vorgesehen, dass eine oder beide der genannten Leitungsabschnitte ein Anschlusshindernis aufweisen. Dieses soll dazu führen, dass zum Anschluss, etwa Überschieben, eines weiterführenden Leitungsabschnittes zwangsläufig zuvor das Hindernis, durch Abschneiden etwa, entfernt werden muss, wodurch sich zugleich dann die erforderliche Durchlauföffnung ergibt. So soll verhindert werden, dass versehentlich eine Anschlussleitung aufgeschoben wird, ohne dass der Leitungsabschnitt zuvor geöffnet worden ist.

Die beschriebene Gestaltung ist insbesondere auch günstig für eine werksmäßige Vormontage und weitgehend werksmäßig auch schon entsprechend ausgebildete Abdichtung.

Es ist nicht notwendig, dass ein tatsächlicher Ablauftopf im Sinne eines jedenfalls im wesentlichen rechteckig kastenartigen Teils, wenn auch diese Gestaltung bevorzugt ist, gebildet ist. Es kann sich insbesondere im Querschnitt um ein insgesamt gerundetes Teil handeln. Es kann sich insofern auch um eine Umlenkung, üblicherweise aus der Vertikalen in die Horizontale, handeln, an welche die Ablaufleitung anschließt. Als Ablauftopf ist hier jedenfalls derjenige Bereich des Ablaufes angesprochen, der bei Entwässerung durch den Ablauf des Duschbodenelementes zunächst voll läuft, bis ein Überlaufen in solche, in Strömungsrichtung dahinter angeordnete Bereiche der Ablaufleitung eintritt. Hierbei kann auch vorgesehen sein, ungeachtet weiterer Wassereinschlüsse durch vertikale Umlenkung der Ablaufleitung, dass im Bereich des Ablauftopfes selbst bereits ein vollständiger Wasserverschluss (Geruchsverschluss) gegeben ist. Durch die höhenmäßig unterschiedliche Führung eines anschließenden Leitungsabschnittes und gegebenenfalls auch eine in dem Ablauftopf selbst bereits vorgesehene Strömungs-Umlenkschikane, bleibt in dem Topf oder der genannten Umlenkung ein bestimmter Wasserspiegel bevorzugt stehen, der damit schon einen Teil des Geruchsverschlusses bilden kann. Der Geruchsverschluss ist bekanntlich durch einen wieder aufsteigenden Abschnitt, bzw. zwischen zwei ansteigenden Abschnitten, des genannten Leitungsabschnittes gebildet. Im Hinblick auf die flache Gestaltung des Geruchsverschlusses, die im Hinblick auf die bevorzugte Unterbringung in der Dicke des plattenartigen Duschbodenelementes angezeigt ist, kann es sich auch empfehlen, einen solchen Geruchsverschluss zweifach in Längserstreckung der Ablaufleitung hintereinander vorzusehen.

Insbesondere ist bevorzugt, dass der den Teil des Geruchsverschlusses oder insgesamt den Geruchsverschluss außerhalb des Ablauftopfes bildende Leitungsabschnitt wellenartig geformt ist. Dies bedeutet, dass der Leitungsabschnitt in einem Längs-Querschnitt, einem Querschnitt in Strömungsrichtung, insgesamt nach oben und unten wechselnd verläuft. "Insgesamt" bedeutet hierbei bevorzugt, dass der höhenmäßige Wechsel von solchem Ausmaß ist, dass nach dem Wechsel ein Leitungsboden sich in einer Horizontalebene oder oberhalb einer Leitungsdecke vor dem Wechsel erstreckt. Dies mit einem Anstiegswinkel und einem Abstiegswinkel. Bevorzugt ist der Anstiegs- und/oder Abstiegswinkel im Bereich von 25 bis 75°, insbesondere 35 bis 65° gewählt. Hierbei sind die Winkelangaben bezogen auf den Verlauf des Unterbodens im Vertikal-Querschnitt der Ablaufleitung bzw. relativ zu einer Horizontalen, bezogen auf die Einbaulage. Der Unterboden weist bevorzugt zwischen einem Abstieg und einem Anstieg einen Bereich auf, der in Einbaulage horizontal verläuft. Der Oberboden bzw. Deckenbereich der Ablaufleitung kann einen selben Anstiegs- und/oder Abstiegswinkel aufweisen oder einen abweichenden. Letzteres auch dadurch, dass es im Bereich der höhenmäßigen Wechsel zu einer Querschnittsverringerung des Leitungsabschnittes kommen kann. Bezogen auf eine Mittelachse liegt der Anstiegs- und/oder Abstiegswinkel in dem genannten letzteren Fall im Bereich von 20 bis 40°. Bezüglich der genannten Gradbereichsangaben sind jeweils auch alle Zwischenwerte, insbesondere in 1°-Schritten, in die Offenbarung mit einbezogen. Dies einerseits zur Eingrenzung der Bereichsgrenzen von und/oder oben, andererseits aber auch zur Offenbarung der so gefundenen Zwischenwerte aus den genannten Bereichen. Jedenfalls ist ersichtlich, dass die Anstiegswinkel und Abstiegswinkel bevorzugt spitze Winkel sind.

In weiterer Einzelheit ist vorgesehen, dass in Längsrichtung dieses Leitungsabschnittes zwei durch im Längsquerschnitt buckelartigen Verlauf des Bodenbereiches dieses Leitungsabschnittes gebildete Boden-Strömungshindernisse ausgebildet sind, zwischen welchen Strömungshindernissen eine Leitungsdecke im Sinne eines gegengerichteten Deckenbuckels soweit heruntergezogen ist, dass sie bis unter die Buckelspitzen der Boden-Strömungshindernisse ragt und so einen Geruchsverschluss ermöglicht. Dies ist dann der allein durch diesen Leitungsabschnitt, außerhalb des Ablauftopfes, gebildete Geruchsverschluss.

Diese durch den buckelartigen Verlauf des Bodens gegebenen Boden-Strömungshindernisse, zusammenwirkend mit einer gegenüberliegenden Decke, entsprechen dem zuvor beschriebenen nach oben und unten wechselnden Verlauf der Ablaufleitung.

Das in Strömungsrichtung zunächst ausgebildete Boden-Strömungshindernis stellt hierbei mit seiner ansteigenden Flanke zugleich den Abschluss des Ablauftopfes dar. Die absteigende Flanke ist Teil des in dem Leitungsabschnitt ausgebildeten Geruchsverschlusses. Das anschließende zweite Boden-Strömungshindernis ergänzt mit seiner ansteigenden Flanke die absteigende Flanke des ersten Boden-Strömungshindernisses und bildet weiter so in Zusammenwirkung mit dem gegengerichteten Deckenbuckel den Geruchsverschluss innerhalb des Leitungsabschnittes. Die absteigende Flanke des zweiten Boden-Strömungshindernisses ist bevorzugt nur gering ausgebildet und bildet zugleich den Übergang in die sich anschließende übliche, bevorzugt mit kreisrundem Querschnitt gebildete, Ablaufleitung.

In Einzelheit ist weiter vorgesehen, dass eine Überdeckung zwischen den Boden-Strömungshindernissen und dem Gegenbuckel einem freien vertikalen Öffnungsmaß oder mehr der Ablaufleitung zwischen den Buckeln entspricht. Insbesondere kann die Überdeckung bis hin zum Zweifachen des genannten freien vertikalen Öffnungsmaßes entsprechen.

Ein Abstand zwischen den Boden-Strömungshindernissen, in Strömungsrichtung gesehen, kann dem 2- bis 10-Fachen des genannten freien vertikalen Maßes entsprechen.

Im Einzelnen ist auch von Bedeutung, dass bevorzugt in dem Leitungsabschnitt und auch der anschließenden Ablaufleitung keine Rückschlagklappe vorgesehen ist. Hiermit kann einerseits der gewünschte hohe Durchfluss auch nochmals unterstützend sichergestellt werden. Andererseits ist genügend Ausgleichsraum geschaffen, um eine eventuelle Rückdrückung der Wassersäule auszugleichen. Eine hohe Durchflussleistung, gegebenenfalls unabhängig davon ob eine Rückschlagklappe vorgesehen ist, ist auch dadurch gegeben, dass die Krümmungen mit einem solchen flachen Winkel ausgebildet sind, dass in den oberen Bereichen bei üblichem Gebrauch verbleibende Luft nach gewissem Durchspülen, bei Benutzung einer entsprechenden Dusche, luftfrei werden und sich so eine selbstansaugende Wassersäule ergibt, die zusätzlich unterstützend die Leistung des Abflusses steigert. Es ist bevorzugt kein Teil in dem gesamten Ablaufsystem des Duschbodenelementes, das aus dem Ablauftopf und dem Leitungsabschnitt und der Ablaufleitung besteht, vorhanden, das aufgrund funktionsbedingter Beweglichkeit ausfallen könnte. Weiter bevorzugt sind als gesonderte Teile lediglich ein Einsatzteil in dem Ablauftopf und/oder ein den Ablauftopf abdeckender Ablaufrost vorhanden. Beide Teile können ersichtlich ohne Weiteres nach oben durch die Ablauföffnung in dem Duschbodenelement zur Wartung und Reinigung entnommen werden.

Im Interesse einer raumsparenden Anordnung, zugleich aber auch im Interesse einer Stabilität, kann vorgesehen sein, dass eines oder mehrere der Strömungshindernisse sich in ihrem jeweiligen unteren Bereich in die Bodenfläche des Duschbodenelementes einpassen, also gegebenenfalls einen Teil der Bodenfläche des Duschbodenelementes zugleich bilden.

Da die Boden-Strömungshindernisse im Querschnitt zugleich brückenartige Elemente bilden, können diese auch vorteilhaft durch entsprechende Durchgriffsverbindungen des Duschbodenelementes unterfasst sein. Diese Durchgriffsverbindungen können einteilig mit dem Duschbodenelement, im übrigen bevorzugt aus dem genannten Schaumstoff, zugleich gebildet sein. Es kann sich eine fensterartige Öffnung ergeben, in welcher nach unten ein Teil des den Geruchsverschluss bildenden Leitungsabschnittes freiliegen kann.

Die angesprochene brückenartige Ausbildung im Bereich der Strömungshindernisse ist zugleich auch stabilitätsmäßig vorteilhaft. Sie erbringt eine Gewölbestruktur, die günstig zur Gesamtstabilität des Ablaufs und auch des so gebildeten Duschbodenelementes insgesamt beitragen kann. Hierbei ist insbesondere auch von Bedeutung, dass die Erstreckung eines solchen Gewölbes, also von Bodenabschnitt zu Bodenabschnitt, wobei ein Bodenabschnitt auch durch den Ablauftopf selbst gebildet in diesem Zusammenhang angesehen werden kann, etwa dem 1- bis 3-Fachen, vorzugsweise dem 2-Fachen, wobei hier auch alle Zwischenwerte, insbesondere in 1/10-Schritten, in die Offenbarung mit einbezogen sind, der Dicke des Duschbodenelementes, in welcher sich die Ablaufleitung erstreckt, entspricht.

Weiter kann das Duschbodenelement eine Unterseiten-Fläche aufweisen und der Boden des Ablauftopfes in der Unterseiten-Fläche verlaufen, bevorzugt derart, dass eine Außenfläche des Bodens bündig zu der Unterseiten-Fläche ist. Bevorzugt kann der Boden des Ablauftopfes mit einem Abstand nach oben zu der Unterseiten-Fläche verlaufen, welcher Abstand 10 mm oder weniger betragen kann. Die Integration des Ablauftopfes in die Unterseiten-Fläche des Duschbodenelementes ist eine Integration des Ablauftopfes in die Unterseite, die Auflagefläche, des plattenartigen Duschbodenelementes. Insofern ist eine fluchtende Ausrichtung eines Bodenbereiches des Ablauftopfes, vorzugsweise wenn dieser ebenflächig verläuft, mit der Unterseiten-Fläche bevorzugt. Es kann sich auch etwa um mehrere, mit ihren Spitzen sich in einer gemeinsamen (ebenen) Fläche befindliche, Bodenvorsprünge handeln.

Hinsichtlich der Maßnahme, den Leitungsabschnitt auf einer Höhe des Topfbodens oder höher verlaufend vorzusehen, ist im Hinblick auf den in unterschiedlichen Höhen verlaufenden Leitungsabschnitt bevorzugt, dass zumindest ein unterer Wandungsbereich des Leitungsabschnittes, weiter bevorzugt auch der Ablaufleitung, oberhalb eines Höhenniveaus des Topfbodens - abschnittsweise - verläuft.

Auch ist es bevorzugt vorgesehen, dass die Ablaufleitung zumindest teilweise abschließend mit der Unterseiten-Fläche des Duschbodenelementes oder mit einem Abstand von 10 mm oder weniger zu der Unterseiten-Fläche verläuft. Hierbei können auch Abschnitte vorgesehen sein, welche in einem unteren Bereich der Ablaufleitung mit deutlich größerem Abstand zu der Unterseiten-Fläche verlaufen. Durch eine mit der Unterseiten-Fläche abschließende Führung der Ablaufleitung kann auch die Ablaufleitung in die Unterseiten-Fläche, also die Auflagefläche des plattenartigen Duschbodenelementes, integriert sein.

Es ist bevorzugt, dass sich die Ablaufleitung oder werkseitig für deren letztliche Ausbildung beim Einbau des Duschbodenelementes bereits vorgesehene Leitungsabschnitte beidseitig des Geruchsverschlusses sich mit einer Erstreckungsrichtung quer zur Durchflussrichtung des Geruchsverschlusses erstreckt. Hierbei kann auf einer Seite der schon genannte Abschnitt ausgebildet sein, der betriebsmäßig nicht durchströmt ist. Es handelt sich gleichsam um einen Tot-Abschnitt. Dieser kann zwar von dem durchströmten Abschnitt aus gesehen zum Einlauf von Abwasser offen sein, er wird aber auf Grund der beim Einbau gewählten Schaltung dann betriebsmäßig nicht durchströmt. Die Ablaufleitung kann sich entsprechend insbesondere seitlich versetzt aber gleichgerichtet zu einer letztlich eingebauten Ablaufrinne erstrecken.

Bevorzugt ist auch, wie weiter vorne bereits angesprochen, dass einer oder beide Leitungsabschnitte herstellungsmäßig, bevorzugt endseitig, verschlossen sind. Beim Einbau vor Ort kann dann einer der Leitungsabschnitte geöffnet werden, zur Verbindung mit der Gebäude-Abflussleitung, der andere Abschnitt bleibt entsprechend dem Herstellungszustand geschlossen.

Es kann auch vorgesehen sein, dass der Adapter hinsichtlich einer bestimmten Standardhöhe vorgegeben ist und nicht zum Abkürzen ausgebildet ist, bzw. ausgehend von dieser Standardhöhe noch gekürzt werden kann.

Auch ist es bevorzugt, dass der Ablauftopf, unterhalb und zugeordnet einer Öffnung der Ablaufrinne, ein herausnehmbares Ablaufgitter aufweist. Weiter bevorzugt kann das Ablaufgitter zwischen zwei sich vertikal erstreckenden Teilungswänden angeordnet sein, welche Teilungswände beidseitig, quer zur Längserstreckungsrichtung der Teilungswände, eine Wasserkammer begrenzen. Somit ist ein weiterer Geruchsverschluss unmittelbar unterhalb der Ablaufrinne und in den Ablauftopf geschaffen. Der Ablauftopf kann hierdurch in zwei oder auch drei, sich in Längsrichtung des Ablauftopfes erstreckende und miteinander kommunizierende Wasserkammern unterteilt sein. Die Unterteilung ist bevorzugt nur in einem oberen Bereich des Ablauftopfes gegeben. Bodenseitig des Ablauftopfes gehen die Kammern bevorzugt ineinander über.

Das Duschbodenelement als solches besteht bevorzugt aus einem Schaumstoff. Beispielsweise aus EPS, expandiertem Polystyrol, oder XPS, extrudiertem Polystyrol. Es kann sich auch um einen integral geschäumten Schaumstoff handeln, beispielsweise um einen Polyurethan-Schaumstoff. Die Dichte liegt bevorzugt im Bereich von 25 bis 110 kg/m³, weiter bevorzugt in einem Bereich von 25 bis 90 kg/m³. Oberseitig oder auch ganzseitig oder auch nur betreffend die Oberseite und die Randseite kann eine Haftvermittlerschicht und/oder Abdichtschicht, wobei die Haftvermittlerschicht auch zugleich die Abdichtschicht sein kann, auf das Schaumstoffteil aufgebracht sein. Die Haftvermittlerschicht kann auch in Gestalt einer Folie, die auf die Oberfläche des Duschbodenelementes aufgezogen ist oder aufgebracht ist, ausgebildet sein. Auch kann die Folie durch eine Vlieslage gegeben sein oder ober- und/oder unterseitig eine solche Vlieslage aufweisen.

Insbesondere ist auch bevorzugt, dass der den Geruchsverschluss erbringende, außerhalb des Ablaufteils ausgebildete Leitungsabschnitt mit einer Breite ausgebildet ist, welche die Dicke des Duschbodenelementes übertrifft, insbesondere dem 1,1- bis 3-fachen der Dicke des Duschbodenelementes entspricht.

Die vor- und nachstehend angegebenen Bereiche bzw. Wertebereiche schließen hinsichtlich der Offenbarung auch sämtliche Zwischenwerte ein, insbesondere in 1/10-Schritten der jeweiligen Dimension, ggf. also auch dimensionslos, also beispielsweise 1/10 (der Dicke, der Länge oder dergl. oder des X-fachen), 1/10 kg/m3 etc., einerseits zur Eingrenzung der genannten Bereichsgrenzen von unten und/oder oben, alternativ oder ergänzend aber auch im Hinblick auf die Offenbarung eines oder mehrerer singulärer Werte aus dem jeweilig angegebenen Bereich.

Nachstehend ist die Erfindung anhand der beigefügten Zeichnungen erläutert, die zeigen:
- Fig. 1: eine perspektivische Darstellung eines Gesamt-Duschbodenelementes;
- Fig. 2: eine Explosionsdarstellung des Gegenstandes gemäß Fig. 1;
- Fig. 3: eine Draufsicht auf den Gegenstand gemäß Fig. 1 bzw. Fig. 2, im Bereich der Ablaufrinne, mit Ablaufleitungs-Anschluss an einer ersten Seite;
- Fig. 4: eine Darstellung gemäß Fig. 3, mit Ablaufleitungsanschluss an einer zweiten Seite;
- Fig. 5: einen Querschnitt durch den Gegenstand gemäß Fig. 3, geschnitten entlang der Linie V-V;
- Fig. 6: einen Querschnitt durch den Gegenstand gemäß Fig. 3, geschnitten entlang der Linie VI-VI;
- Fig. 7: eine Unteransicht des Gegenstandes in einer Darstellung gemäß Fig. 1;
- Fig. 8: eine Darstellung des Ablauftopfes mit angeschlossenem, sich seitlich dazu befindendem Geruchsverschluss und weiter angeschlossenen Leitungsabschnitten der Ablaufleitung, im Herstellungszustand;

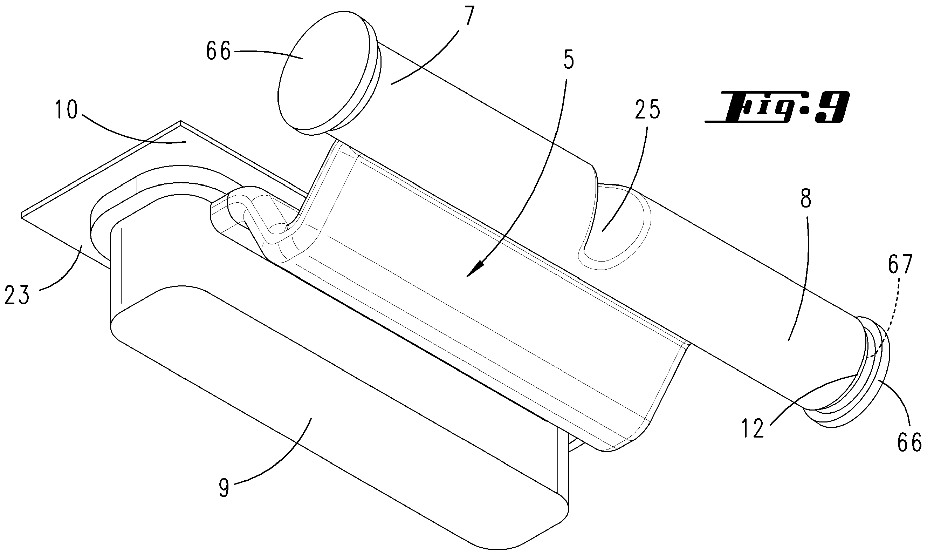

- Fig. 9: eine perspektivische Darstellung von schräg unten des Gegenstandes gemäß Fig. 8;
- Fig. 10: ein Einsatzteil für den Ablauftopf in einer perspektivischen Ansicht von schräg oben;
- Fig. 11: das Einsatzteil gemäß Fig. 10, in einer perspektivischen Ansicht von schräg unten;
- Fig. 12: eine Querschnittsdarstellung gemäß Fig. 5, in einer alternativen Ausführungsform;
- Fig. 13: das Einsatzteil des Ablauftopfes in der Ausführungsform gemäß Fig. 12 in einer perspektivischen Ansicht von schräg oben;
- Fig. 14: eine Darstellung des Teils gemäß Fig. 13 in einer Ansicht von schräg unten;
- Fig. 15: eine schematische Querschnittsansicht einer weiteren alternativen Ausführungsform betreffend die Darstellung der Fig. 12;
- Fig. 16: eine weitere alternative Darstellung betreffend die Darstellung der Fig. 12 bzw. Fig. 15;
- Fig. 17: eine weitere schematische Querschnittsdarstellung einer weiteren alternativen Ausführung der Ausbildung gemäß den Figuren 12,15 und 16;
- Fig. 18: die Ausführungsform der Fig. 17 in perspektivischer Darstellung mit aufgesetztem Distanzteil und angeschlossenem Geruchsverschluss;
- Fig. 19: eine Teil-Draufsicht auf das Duschbodenelement im Bereich der Ablaufrinne und anschließendem seitlichem Teil;
- Fig. 20: einen Querschnitt durch den Gegenstand gemäß Fig. 19, geschnitten entlang der Linie XX-XX; und
- Fig. 21: eine Explosionsdarstellung des Aufbaus gemäß Fig. 20.

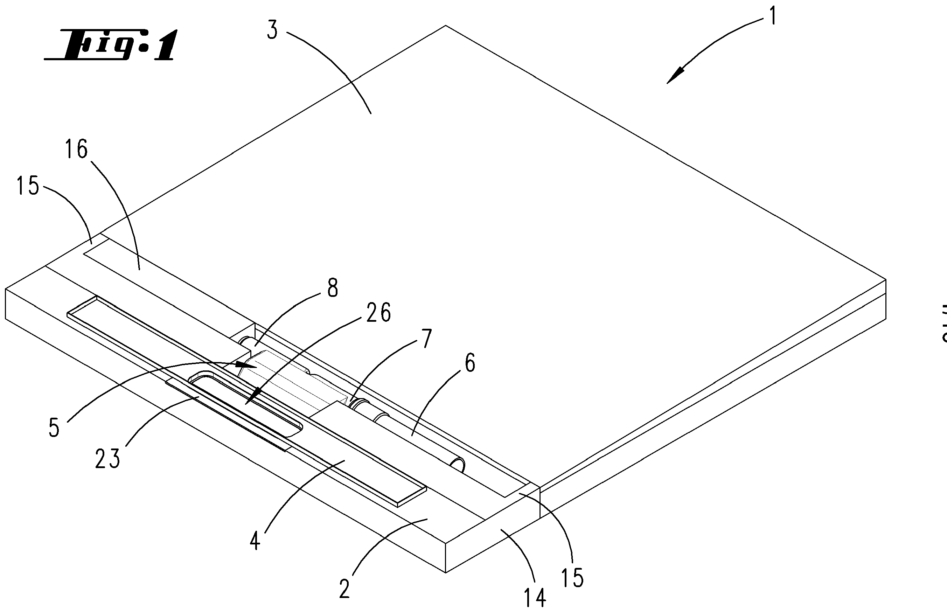

Dargestellt und beschrieben ist, zunächst mit Bezug zu den Figuren 1 bis 4, ein Duschbodenelement 1, das beim Ausführungsbeispiel aus zwei Teilelementen 2, 3 besteht. Das Teilelement 3 nimmt hierbei bevorzugt keinerlei Funktionsteile wie eine Ablaufleitung auf. Es besteht bevorzugt nur aus einem oder, wie in der konkreten Darstellung ersichtlich, zwei, hier übereinander angeordneten, Schaumstoffteilen. Es kann sich um ein unteres, rechteckiges Teil gleicher Dicke und ein aufgesetztes keilförmiges Teil handeln, welch letzteres ersichtlich eine, bevorzugt einheitliche, Schrägfläche zu dem Teilelement 2 hin ergibt. Zum Ablauf von Wasser in die Ablaufrinne.

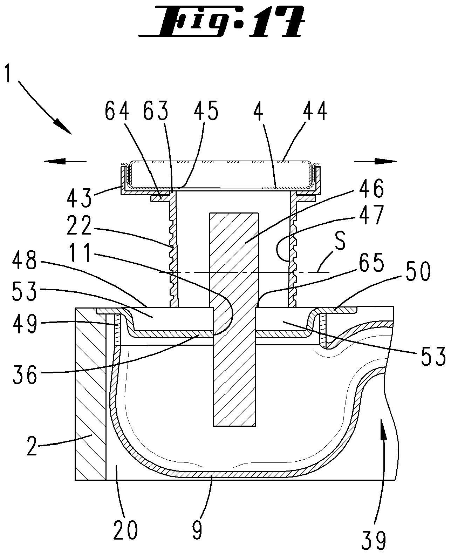

Das Teilelement 2 weist eine Ablaufrinne 4 auf. Es kann sich auch um eine Aufnahme 43 (vgl. beispielsweise Figur 17) für eine einzusetzende Ablaufrinne 4 handeln, wie weiter unten noch erläutert. Weiter einen Geruchsverschluss 5 und hieran zur Ausbildung einer Ablaufleitung anschließende Leitungsabschnitte 7, 8, von denen einer, der Leitungsabschnitt 7, in einer hier nur teilweise dargestellten Ablaufleitung fortgeführt ist.

Die Leitungsabschnitte 7, 8 und insbesondere das Leitungsteil 6 erstrecken sich unter Einschluss eines Winkels von kleiner als 180°, bevorzugt rechtwinklig, zu einer Erstreckungsrichtung, die hier auch mit einer Durchströmungsrichtung zusammenfällt, des Geruchsverschlusses 5. Diese Erstreckung der Ablaufleitung unter dem genannten Anschlusswinkel ist insgesamt mit "quer" bezeichnet. Der eingeschlossene Winkel zwischen einem durchströmten Leitungsabschnitt 7 und/oder 8 der Ablaufleitung, ist bezüglich einer Längsmittelachse dieses Leitungsabschnittes 7 und/oder 8 bzw. der dort gegebenen Durchströmungsrichtung und der Längserstreckung bzw. Durchströmungsrichtung des Geruchsverschlusses 5 verstanden. Da die Leitungsabschnitte 7 und 8 bevorzugt zueinander fluchtend, also bevorzugt mit einer übereinstimmenden Längsachse, gebildet sind, ergibt sich auch sogleich, dass in dem anderen der beiden Leitungsabschnitt der eingeschlossene Winkel entweder gleich ist (rechter Winkel) oder dort wo bezüglich des einen Leitungsabschnittes ein eingeschlossener spitzer Winkel gegeben ist, bezüglich des anderen Leitungsabschnittes dann ein entsprechender stumpfer Winkel gegeben ist.

Der eingeschlossene Winkel kann sich bis hinunter zu beispielsweise 30° ergebend vorgesehen sein.

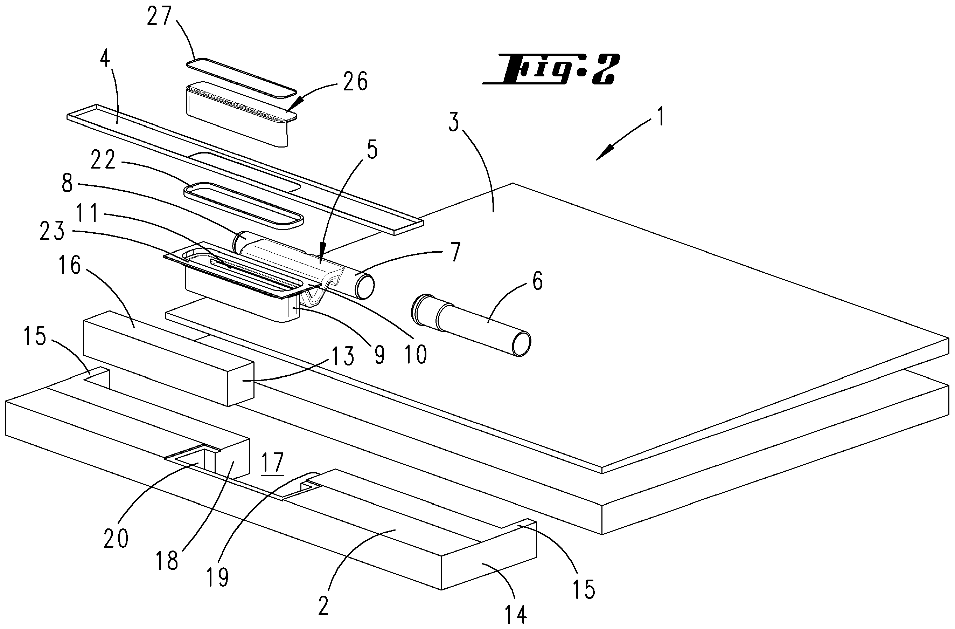

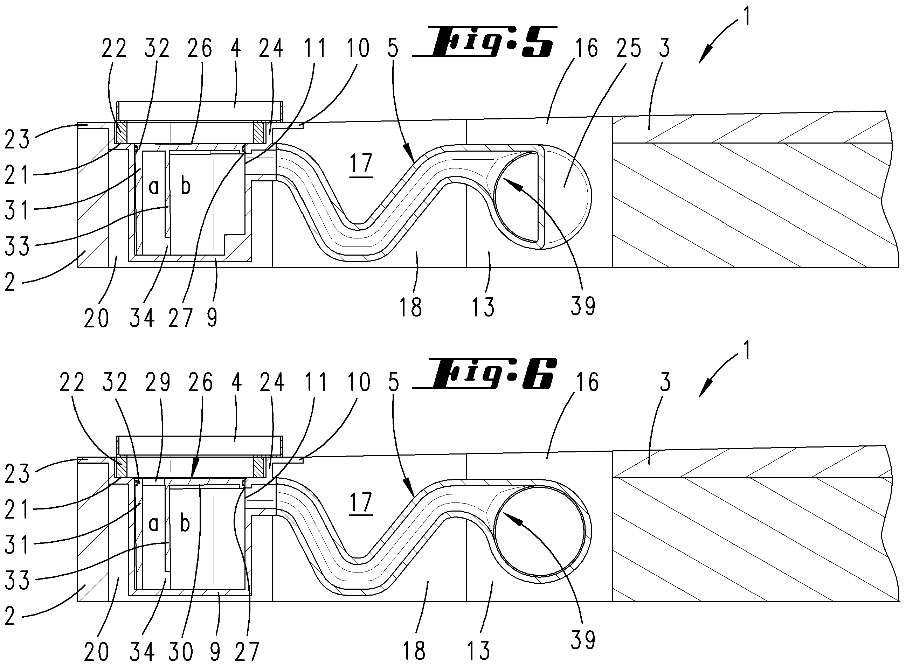

Wie sich in weiterer Einzelheit aus Figur 2 ergibt, geht der Geruchsverschluss 5 von einem langgestreckten Ablauftopf 9 aus. Bevorzugt ist er hiermit einteilig ausgebildet. In dem Ablauftopf 9 ist zugeordnet einer Oberseite 10 des Ablauftopfes 9 eine langgestreckte Ablauföffnung 11 ausgebildet, wie sich dies auch in weiterer Einzelheit etwa aus den Figuren 5 und 6 ergibt.

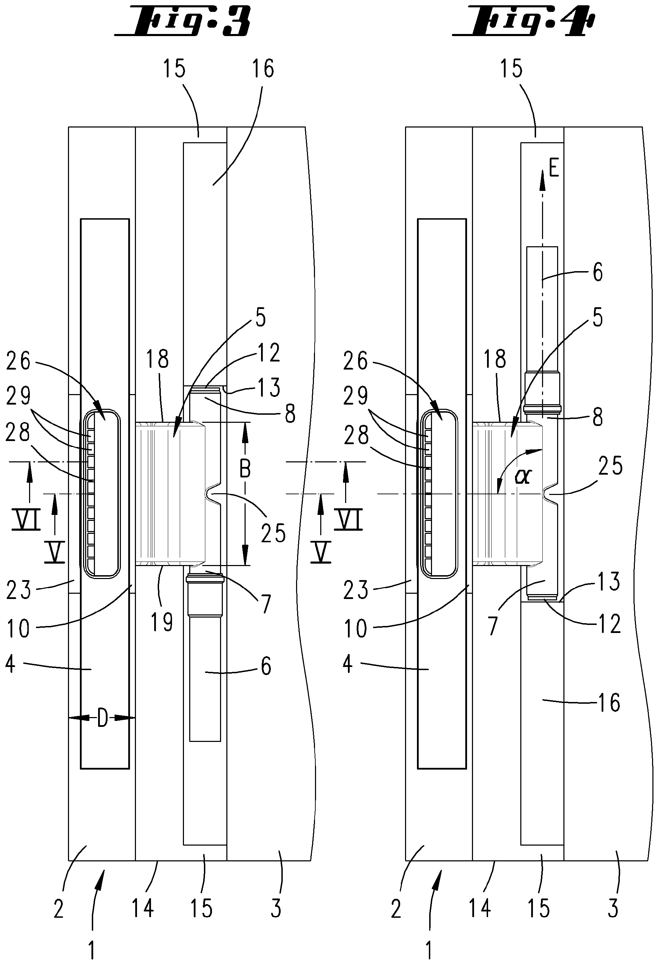

Figur 2 zeigt den mit dem Ablauftopf 9 verbundenen, den Geruchsverschluss 5 bildenden Leitungsabschnitt und daran angebundene weitere Leitungsabschnitte 7, 8, als bereits vorgegebene Teilbereiche einer Ablaufleitung, im Herstellungszustand. Dies bedeutet für die Leitungsabschnitte 7,8, dass sie endseitig, an ihren Stirnseiten 12, 13 (siehe auch Fig. 3) verschlossen sind. Durch bspw. Abschneiden kann eine Stirnseite 12, 13 geöffnet werden.

An den geöffneten Leitungsabschnitt 7 oder 8 kann das Leitungsteil 6 angeschlossen werden, zum weiteren Anschluss an eine im Gebäude vorgegebene Haus-Ablaufleitung. Die sich durch einen Leitungsabschnitt 7, 8 und das Leitungsteil 6 im Duschbodenelement ergebende Ablaufleitung ist hier verkürzt dargestellt. Sie kann dann, beim Ausführungsbeispiel der Figur 2 an der dort rechts ersichtlichen Seite, die bevorzugt mit Bezug zu dem Teilelement 2 eine Schmalseite 14 des Teilelementes 2 ist, herausgeführt werden. Ein Teilabschnitt 15 der Seite bzw. Schmalseite 14 kann hierzu noch weggebrochen oder abgeschnitten werden.

Wenn die räumlichen Gegebenheiten eine Herausführung an der anderen Seite, insbesondere Schmalseite des Teilelementes 2 erfordern, wird entsprechend ausgehend von dem Leitungsabschnitt 8 die Ablaufleitung gebildet und weiter herausgeführt.

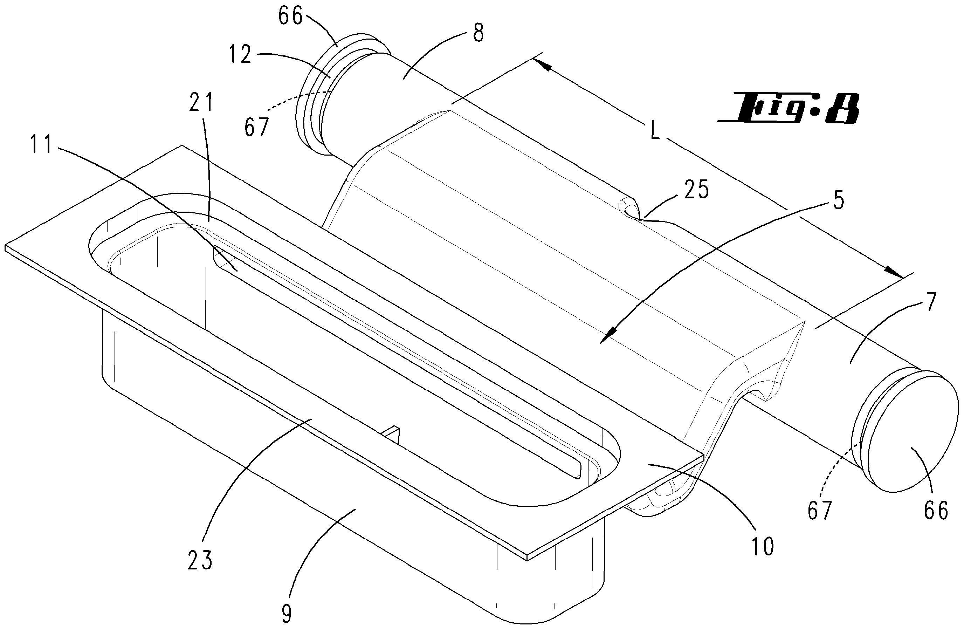

Wie aus Fig. 8 ersichtlich, kann ein Leitungsabschnitt 7 und/oder 8 mit einem Anschlusshindernis 66 ausgebildet sein. Das Anschlusshindernis 66 kann ein radial sich erstreckender, den Durchmesser des Leitungsabschnittes 7 bzw. 8 deutlich übersteigendes Tellerteil sein. Dieses kann angeklebt oder einteilig mit dem Leitungsabschnitt 7 bzw. 8 ausgebildet sein. Es kann sich auch insofern um ein sternförmiges Teil handeln. Dieses Anschlusshindernisteil 66 soll verhindern, dass ohne Öffnung des betreffenden Leitungsabschnittes 7 oder 8 ein Leitungsteil 6 aufgeschoben wird. Vielmehr ist das Anschlusshindernis 66 bevorzugt derart ausgebildet, dass es in einfacher Weise nur über eine Solltrennlinie 67 zusammen mit dem Verschluss des Leitungsabschnittes 7 bzw. 8 in einfacher Weise entfernt werden kann. Will man also das Anschlusshindernis 66 entfernen, öffnet man damit zwangsweise zugleich den Leitungsabschnitt 7 bzw. 8.

Zum Lieferumfang eines solchen Duschbodenelementes gehört weiter bevorzugt ein Füllelement 16. Das Füllelement 16 ist, wie sich dies etwa aus Figur 1 ergibt, in seiner Länge an den Bereich zwischen der Stirnseite 13 des Leitungsabschnittes 8 und eine Innenseite des zugeordneten Teilabschnitts 15 der diesbezüglichen Schmalseite angepasst. In der Breite ist es so vorgesehen, dass es der freikragenden Länge, in Schmalseitenrichtung, des Teilabschnittes 15 entspricht.

Aufgrund der symmetrischen Ausbildung der Leitungsabschnitte 7, 8 im Hinblick auf ihre Längserstreckung bezogen auf eine Mitte des Geruchsverschlusses 5 kann dasselbe Füllelement 16 auch gegenüberliegend zur Auffüllung benutzt werden, wenn die Ablaufleitung 6 an den Leitungsabschnitt 8 angeschlossen wird. Hiervon abgesehen kann aber auch eine unterschiedliche Länge der Leitungsabschnitte 7, 8 vorgesehen sein.

Das Teilelement 2 ist bei noch nicht eingesetztem Ablauftopf 9, Geruchsverschluss 5 und angeschlossenen Leitungsabschnitten 7, 8 sowie bei entferntem Füllelement 16, wie dies auch aus Figur 2 hervorgeht, von seiner dem Teilelement 3 zugewandten Seite aus gesehen mit einer mehrfach strukturierten Einbuchtung, und zwar bevorzugt bodenlosen Einbuchtung, gebildet. Auf einen in diese Richtung gesehenen ersten langgestreckten Abschnitt, der in seiner Länge bevorzugt der zweifachen Länge des Füllelementes 16 und der Erstreckung der Leitungsfortsätze 7, 8 zwischen ihren Stirnseiten 12, 13 entspricht, folgt ein eingeschnürter Abschnitt zwischen zugewandten Stirnflächen 18, 19. Dieser eingeschnürte Abschnitt entspricht in seiner Breite, wie dies auch aus den Figuren 3 und 4 bspw. hervorgeht, der Breite des Geruchsabschlusses 5 in diesem Bereich. Sodann öffnet sich die Einbuchtung wieder zur Bildung der Aufnahme 20 für den Ablauftopf 9.

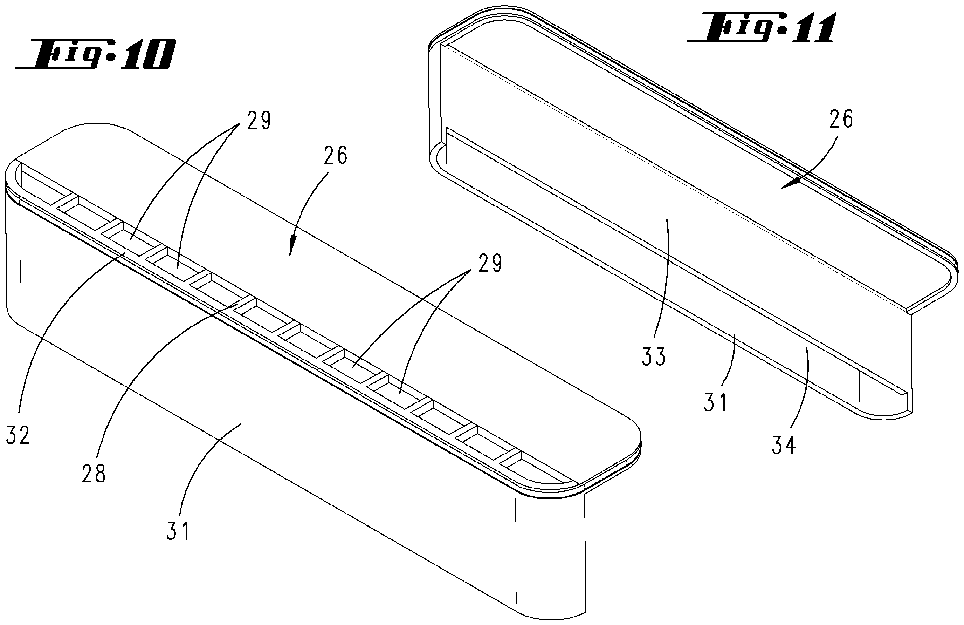

Der Ablauftopf 9 weist weiter ersichtlich in Einzelheit, bezogen nun bspw. auf die Figuren 5 und 6, eine erste horizontal verlaufende Absatzfläche 21 auf. Diese Absatzfläche 21 ist bevorzugt umlaufend, weiter bevorzugt aber jedenfalls an den Längsrändern und/oder den Stirnrändern des Ablauftopfes 9 ausgebildet. Diese Absatzfläche 21 dient zur Aufnahme eines Adapterteils 22, mit welchem eine vertikale Höhe der darauf aufsitzenden Ablaufrinne 4 variiert werden kann. Beispielsweise im Hinblick auf eine Dicke einer Sanitärfläche, beispielsweise Fliesen, die auf der Oberseite des Schaumstoff-Duschbodenelementes noch aufgebracht wird. Beim Ausführungsbeispiel der Figuren 5 und 6 ist die vertikale Höhe, die durch Abschneiden eines zunächst in dieser Erstreckungsrichtung längeren Teiles bspw. bestimmt werden kann, so bestimmt, dass eine Unterkante der Ablaufrinne 4 mit einer zweiten horizontalen Absatzfläche 23, die sich nach außen gerichtet an einen vertikalen Verbindungsabschnitt 24 anschließt, abschließt. Die horizontale Absatzfläche 23 geht zugleich bevorzugt, wie ersichtlich, in eine Oberseite des Teilelementes 2 über. Figur 11 zeigt eine andere mögliche vertikale Höhe des Adapterteiles 22.

Die Ablauföffnung 11 ist ersichtlich unmittelbar unterhalb der ersten horizontalen Absatzfläche 21 gebildet. Ein vertikales Öffnungsmaß der Ablauföffnung 11 entspricht bevorzugt einem Zehntel bis einem Drittel der inneren vertikalen Höhe des Ablauftopfes 9, vom Boden bis zur Oberkante der ersten horizontalen Absatzfläche 21.

In den Ablauftopf 9 ist weiter bevorzugt ein Einsatzteil 26 mit einer umlaufenden Dichtung 27 eingesetzt. Das Einsatzteil 26 weist integriert ausgebildete Gitterelemente 28 auf. Die Gitterelemente 28 unterteilen einen entsprechend langgestreckten Öffnungsbereich in eine Vielzahl von Einzelöffnungen 29. Seitlich zu dem langgestreckten Öffnungsabschnitt ist ein Deckelabschnitt 30, weiter bevorzugt auch integral an dem Einsatzteil 26, ausgebildet. Hiermit wird ersichtlich beim Einsetzen des Einsatzteiles 26 ein großer Flächenbereich der Öffnungsfläche des Ablauftopfes 9 abgedeckt. Der Flächenanteil des Deckelabschnitts 30 ist bevorzugt gleich oder größer als der Flächenanteil, in welchem die Gitterelemente 28 und die Einzelöffnungen 29 ausgebildet sind. Bevorzugt bis hin zum Fünffachen größer.

Wie sich etwa aus den Darstellungen der Figuren 10 und 11 ergibt, ist der Öffnungsbereich außenseitig mit einer Vertikalwandung 31 ausgebildet. Die Vertikalwandung 31 erstreckt sich vertikal nach unten, ausgehend von einem die Einzelöffnungen 29 außen abschließenden Horizontalsteg 32. Weiter weist das Einsatzteil 26 eine gleichfalls in vertikaler Richtung verlaufende Zwischenwand 33 auf. Die Zwischenwand 33 geht von einer dem Horizontalsteg 32 gegenüberliegenden Begrenzung der Einzelöffnungen 29 aus. Die Zwischenwandung 33 hat eine geringere Erstreckung nach vertikal unten als die Vertikalwand 31. Somit ergibt sich hierdurch einerseits eine Ausflussöffnung 34 und andererseits ein erster Geruchsverschluss im Bereich des Ablauftopfes. Der Ablauftopf 9 ist hierdurch in zwei Kammern a, b unterteilt.

Die bevorzugt kleinere Kammer a ist der Gitterausbildung, Gitterelemente 28, zugeordnet. Die größere Kammer b ist horizontal einerseits durch die Zwischenwand 33 und andererseits durch die auf der zur Ablaufleitung gerichteten Seite aufsteigenden Wandung des Ablauftopfes begrenzt. Beide Kammern gehen bodenseitig ineinander über, da die Zwischenwand 33 mit vertikalem Abstand zum Boden endet.

Bei Herausnahme des Einsatzteiles 26 liegt der Ablauftopf 9 insgesamt zur bspw. Reinigung frei.

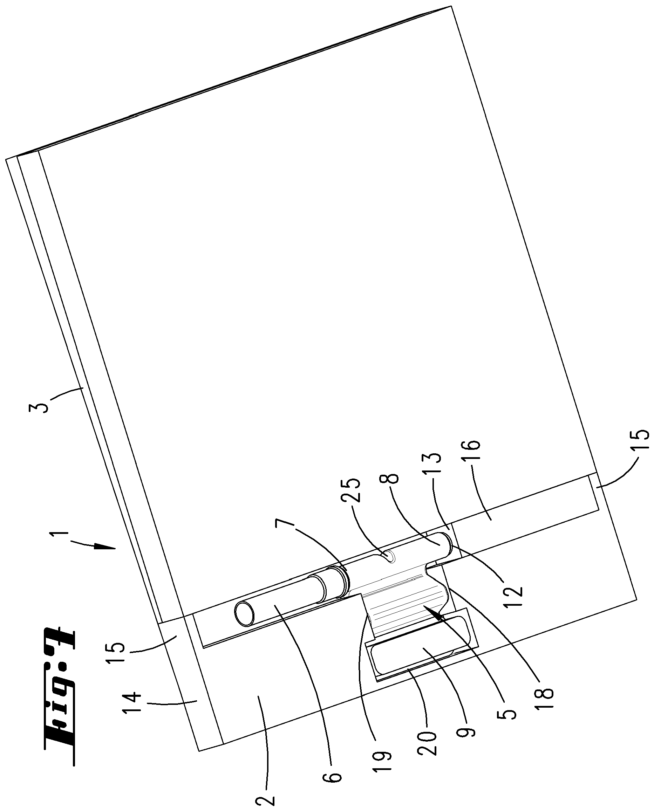

Wie weiter ersichtlich, vgl. auch Figur 7, gehen die einander zugewandten Endbereiche der Leitungsabschnitte 7, 8 bevorzugt nicht vollständig fluchtend ineinander über. Vielmehr ist außenseitig eine V-förmige Einbuchtung 25 ausgebildet. Diese fällt etwa mit einer Längsmitte des Geruchsverschlusses (gesehen in Durchströmungsrichtung) zusammen. Die Einbuchtung kann vorteilhaft sein im Hinblick auf eine Herstellung des Geruchsverschlusses, ggf. auch zusammen mit dem Ablauftopf 9, mit den Leitungsfortsätzen 7, 8, etwa im Blasverfahren. Weiter kann diese Einbuchtung 25 innenseitig eine Funktion eines Strömungsteilers oder Lenkers übernehmen.

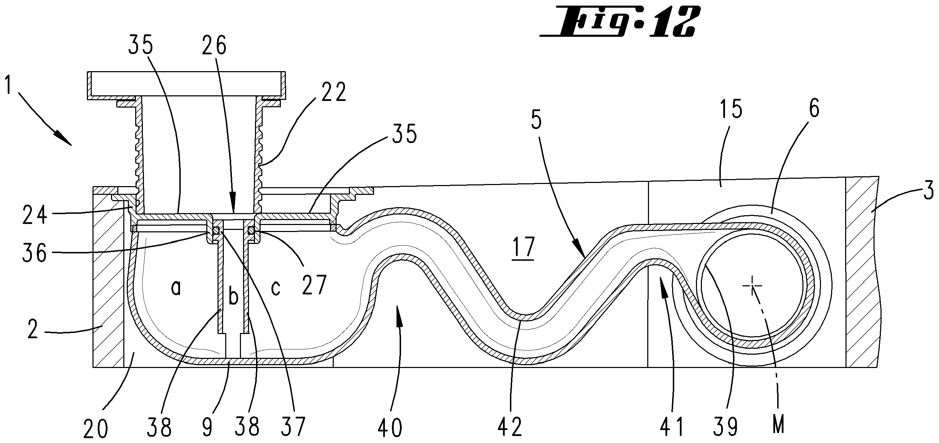

Die in den Figuren 12 bis 14 dargestellte weitere Ausführungsform unterscheidet sich im Hinblick auf die Ausbildung des Einsatzteils von der erstbeschriebenen Ausführungsform.

Im Übrigen ist in Figur 12 auch ein Adapter 22 größerer vertikaler Erstreckung dargestellt.

Mit Bezug zu Figur 12 ist weiter ersichtlich, dass der Deckelabschnitt der vorbeschriebenen Ausführungsform nunmehr als Decke 35 des Ablauftopfes 9 ausgebildet ist. Die Decke 35 kann integral mit dem Ablauftopf 9 ausgebildet sein oder in diesen eingeklebt sein. Sie kann auch als gesondertes herausnehmbares Teil gebildet sein.

Die Decke 35 ist insbesondere weiter bevorzugt, bezogen auf den dargestellten Querschnitt, zweigeteilt ausgebildet, nämlich weiter bevorzugt in zwei etwa flächengleiche gegenüberliegende Teilbereiche aufgeteilt.

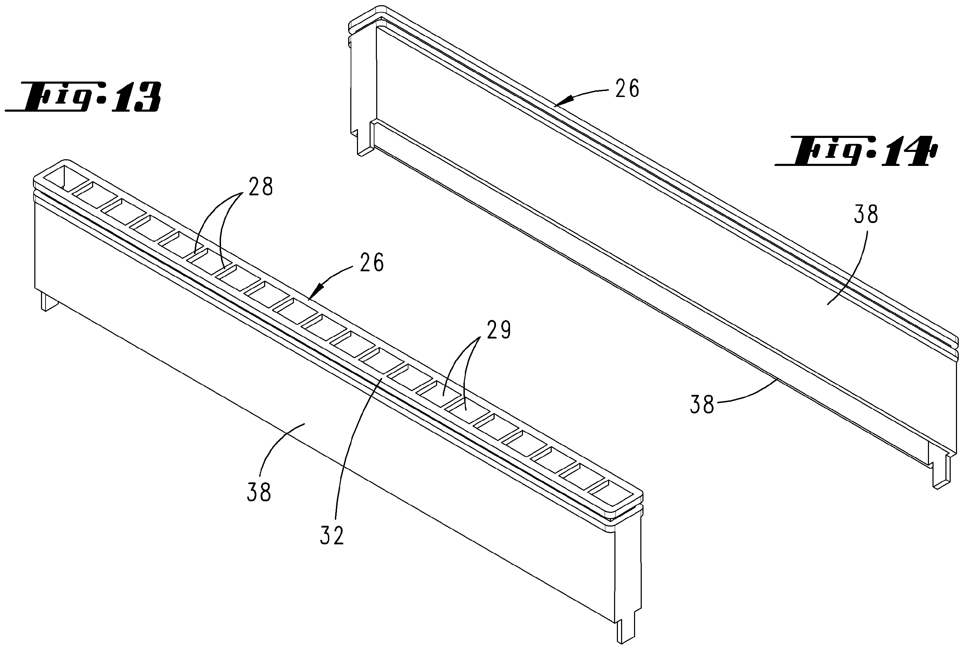

Zwischen den Teilbereichen der Decke 35 ist das nun in seiner Breitenerstreckung deutlich geringer ausgebildete Einsatzteil 26 eingesetzt. Die zugeordneten Randkanten der Teilbereiche weisen zudem sich vertikal nach unten erstreckende Wangenabschnitte 36 auf. Wie sich weiter aus den Figuren 13 und 14 ergibt, weist das Einsatzteil 26 im eingesetzten Zustand zugeordnet den Innenseiten der Wangenabschnitte 36 eine bevorzugt umlaufende Dichtungsaufnahme 37 auf. Vergleichbar der ersten Ausführungsform kann in diese Dichtungsaufnahme 37 eine Dichtung 27, bspw. in Form eines O-Ringes, eingesetzt sein.

Das Einsatzteil 26 ist oberseitig wiederum mit Horizontalstegen 28 und Zwischenöffnungen 29 zur Ausbildung eines gitterartigen Öffnungsbereiches versehen. Vertikal nach unten von Randbereichen des gitterartigen Öffnungsbereiches erstrecken sich zwei, hier bevorzugt in ihrer Vertikalerstreckung etwa gleich lange, Vertikalwände 38. Die Vertikalerstreckung ist auch hier wieder geringer als es einer entsprechenden Tiefe des Ablauftopfes 9 entspricht. Zwischen den Vertikalwänden 38 ist ein erster Geruchsverschluss auch hierbei ausgebildet. Insgesamt ist der Ablauftopf 9 so in drei Kammern a, b, c unterteilt.

Es handelt sich auch hier, wie schon in Bezug auf die vorbeschriebene Ausführungsform, nicht um voneinander getrennte Kammern, sondern um Bereiche des Ablauftopfes, die in horizontaler Richtung, über einen Teil der vertikalen Höhe, voneinander gesondert sind, in einem Bereich über die vertikale Höhe aber auch ineinander übergehen.

Im Einzelnen ist hierbei die erste Kammer a einerseits durch eine aufstehende Wandung des Ablauftopfes auf der der Ablaufleitung abgewandten Seite und andererseits durch eine insoweit erste Vertikalwand 38 des Einsatzteils 26 begrenzt. In horizontaler Richtung weist diese Kammer a eine deutlich größere Erstreckung auf als die weitere sich anschließende Kammer b. Etwa bevorzugt eine Erstreckung, die doppelt so groß ist in horizontaler Richtung wie diejenige der Kammer b. Bis hin zum beispielsweise 6-fachen der horizontalen Erstreckung der Kammer b.

Die Kammer b ist in horizontaler Richtung durch die beiden Vertikalwände 38 dieses Einsatzteiles 26 begrenzt.

Die sich daran in Richtung auf die Ablaufleitung anschließende dritte Kammer c ist einerseits durch die zugeordnete Vertikalwand 38 dieses Einsatzteiles 26 begrenzt und andererseits, wie bei der Kammer b der vorbeschriebenen Ausführungsform, durch die in Richtung auf die Ablaufleitung gegebene aufstehende Wandung des Ablauftopfes. Die Kammer c weist etwa eine gleich große Erstreckung in horizontaler Richtung auf wie die Kammer a, bevorzugt noch etwas größer, also beispielsweise bis hin zum 10-fachen der horizontalen Erstreckung der Kammer b.

Alle drei Kammern a, b, c sind auch hier im unteren Bereich, zugeordnet dem Boden des Ablauftopfes, ineinander übergehend ausgebildet.

Bei beiden Ausführungsformen ist ein zweiter Geruchsverschluss, der schon angesprochene Geruchsverschluss 5, durch die im Querschnitt V-förmige Führung des Abflusses zwischen der Ablaufleitung und dem Ablauftopf gegeben.

Insbesondere ist auch ersichtlich, dass eine Breite B des den Geruchsverschluss 5 bildenden Leitungsabschnittes eine Breite D des Ablauftopfes 9 übertrifft. Weiter bevorzugt entspricht die Breite B dem 1,5- bis 5-fachen der Breite D. Beim Ausführungsbeispiel ist auch die Erstreckungsrichtung E der Ablaufleitung bzw. diesbezüglicher Leitungsabschnitte 7, 8, gegebenenfalls ergänzt um das Leitungsteil 6, in einem rechten Winkel α zur Durchflussrichtung des Geruchsverschlusses 5 angeordnet.

Die Mündung 39 des den Geruchsverschluss 5 bildenden Leitungsabschnittes in die Ablaufleitung bzw. ein diesbezügliches im Wesentlichen zylindrisches Teil, das im Anschluss an den genannten, den Geruchsverschluss 5 bildenden Leitungsabschnitt mit einer sich in der Erstreckungsrichtung E erstreckenden Mittelachse angeschlossen ist, weist in Richtung dieser Erstreckungsrichtung eine größere Erstreckung auf als es dem Durchmesser der Ablaufleitung bzw. des genannten im Wesentlichen zylindrischen Abschnittes entspricht. Weiter bevorzugt handelt es sich um eine Länge L, die dem 1,5- bis 10-fachen des Durchmessers der Ablaufleitung bzw. des genannten zylindrischen Bereiches im unmittelbaren Anschluss an den den Geruchsverschluss 5 bildenden Leitungsabschnitt entspricht.

Das Adapterteil 22 sitzt bei dieser Ausführungsform auf der Decke 35 auf. Es kann allerdings auch bei dieser Ausführungsform alternativ vorgesehen sein, dass das Adapterteil 22 auf der Absatzfläche 21 aufsitzt. Umgekehrt kann bezüglich der zuvor beschriebenen Ausführungsform auch vorgesehen sein, dass das Adapterteil auf der Decke, insbesondere dem Deckelabschnitt 30, aufsitzt. Dies jedenfalls dann, wenn nicht, wie jetzt bevorzugt, der Deckelabschnitt 30 ebenengleich mit der Stufenfläche 21 ausgebildet ist, sondern beispielsweise entsprechend der hier beschriebenen weiteren Ausführungsform dem gegenüber nochmals abgesenkt.

Bezüglich eines Vergleichs der Ausführungsformen gemäß Figuren 5 bzw. 6 mit der Ausführungsform der Figur 12 ist ersichtlich, dass in beiden Fällen ein erster ansteigender Bereich des Geruchsverschluss 5 zugleich eine diesbezügliche seitliche Wandung des Ablauftopfes 9 bildet. Insofern ist der Anstiegswinkel bei der ersten Ausführungsform ein rechter Winkel, während er bei der Ausführungsform der Figur 12, über die weiter vorne genannten Bereiche von 35° bis 55° hinausgehend bei etwa 75° bis 85° liegt. Die zwischen den insofern durch die Boden-Strömungshindernisse 40, 41 heruntergezogene Leitungsdecke 42 ist noch bis unter eine Mittelachse M der Ablaufleitung heruntergezogen. Die Ablaufleitung kann insbesondere außerhalb der Mündung 39 näher an eine Bodenfläche des Teilelementes herangeführt sein, etwa durch ein muffenartiges Teil im Anschlussbereich, wie sich dies aus der Darstellung der Figur 12 etwa ergibt. Andererseits kann die Teil-Ablaufleitung, die zunächst nur durch die Leitungsabschnitte 7, 8 und dem dazwischen befindlichen zylinderartigen Teil gebildet ist, gleichsam in der Querschnittsdarstellung freihängend sein, wie ebenfalls aus Figur 12 ersichtlich.

Dagegen ist der Boden des Ablauftopfes 9 und die dem heruntergezogenen Deckenbereich 42 gegenüberliegende Leitungswandung nahezu im unteren Abschlussbereich des Duschbodenelementes verlaufend vorgesehen.

Mit Bezug zu den Figuren 12 und 15 bis 18 sind verschiedene Ausführungsformen betreffend der Verschiebbarkeit der Ablaufrinne dargestellt. Hierbei ist die Ablaufrinne 4 in Figur 17 in einer Aufnahme 43 sitzend dargestellt. Weiter ist ein in die Ablaufrinne 4 eingesetzter Rost 44 angedeutet. Bei dieser Ausführungsform braucht die Ablaufrinne 4 hinsichtlich der mit einer Versetzung um 180° erreichbaren unterschiedlichen seitlichen Ausladung nicht gesondert ausgebildet zu werden. Vielmehr kann hier eine übliche Standard-Ablaufrinne eingesetzt werden, da die mögliche Veränderung der seitlichen Ausladung durch die Aufnahme erbracht wird.

Wesentlich ist zunächst, dass eine Höhenverstellbarkeit der Ablaufrinne 4 und/oder der Aufnahme 43 mittels des Adapters 22 als Distanzmittel möglich ist. Der Adapter 22, der einerseits oberseitig ausgebildet ist, die Ablaufrinne 4 und/oder die Aufnahme 43 zu haltern, weist andererseits Solltrennebenen S auf, an welchen er horizontal abgetrennt werden kann, um so unterschiedliche Höhen einzustellen. Die Ausbildung zur Halterung der Ablaufrinne 4 und/ oder der Aufnahme 43 ist bevorzugt durch einen gegenüber einem Durchflusskragen 63 außen, abgesenkt, im Hinblick auf eine obere Stirnfläche des Durchflusskragen 63, umlaufenden Flansch 64 gegeben.

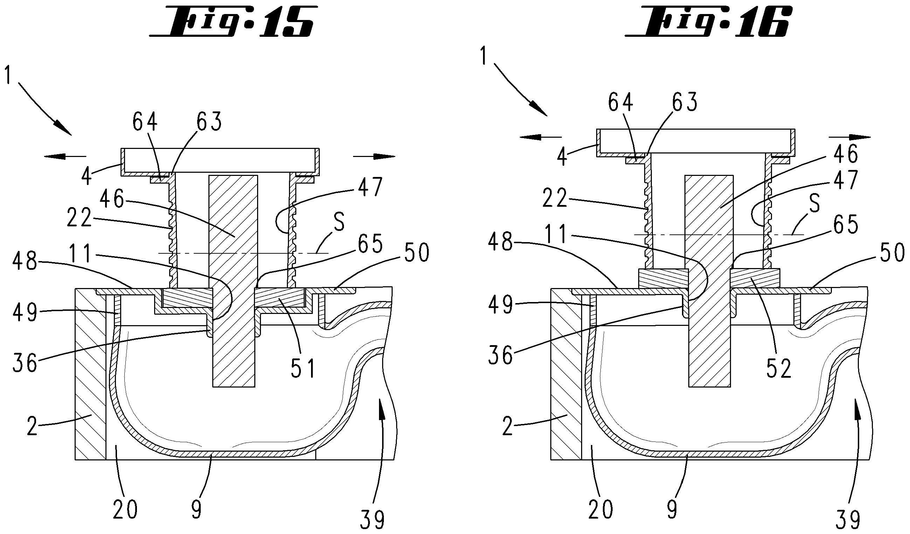

Unterseitig ist der Adapter 22 wie dargestellt bevorzugt ebenflächig abschließend mit einem umlaufenden geschlossenen Rand ausgebildet. Weiter bevorzugt ist der Adapter 22 über seine gesamte Höhe leitungsartig geschlossen ausgebildet. Denn durch eine Auslauföffnung 45 der Ablaufrinne 4 strömt ablaufendes Wasser durch den Adapter 22 in die Ablauföffnung 11 des Ablauftopfes 9. Ergänzend, ggf. auch durch entsprechende Öffnungen in den Adapter 22 kann außenseitig des Adapters 22 oder eben auch in diesen hereinlaufend, Sickerwasser in den Ablauftopf einfließen. Bei den Darstellungen der Figuren 15 bis 18 erscheint dies zwar nicht möglich, da die Ablauföffnung 11 durch ein Platzhalterteil 46 verschlossen ist. Das Platzhalterteil 46 hat aber nur Bedeutung im Zuge des Aufbaus der Ablaufrinne in Bezug auf den Ablauftopf und wird nachher entfernt. Bei dem Platzhalterteil 46 kann es sich beispielsweise um Schaumstoffteil handeln. Das Platzhalterteil hat auch den Vorteil, dass es verhindern hilft, dass bei dem Einbau des Duschbodenelementes ungewollt Material in den Ablauftopf gelangen kann.

Das Platzhalterteil 46 ist bevorzugt im Grundriss gleich der Ablauföffnung 11 ausgebildet. Es kann auch dazu dienen, die mögliche Verschiebung des Adapters 22 in Horizontalrichtung zu begrenzen. Es kann eine stufenartige Verbreiterung 65 aufweisen, mit der es oberseitig der Ablauföffnung 11 oder eines beispielsweise vorgesehenen Auflageteils 52 aufsitzt.

Die Verschiebbarkeit des Adapters 22 ist bevorzugt über einen wesentlichen Bereich gegeben, beispielsweise über einen halben Zentimeter oder mehr, bis hin zu 10 cm bspw. in einer Richtung. Die Verschiebbarkeit kann auch in zwei zueinander senkrechten horizontalen Richtungen, und damit auch in jeder horizontalen Zwischenrichtung, gegeben sein. Die Begrenzung der Verschiebbarkeit ist bevorzugt lediglich dadurch gegeben, dass eine Innenfläche 47 des Adapters 22 mit einer Innenfläche der Vertikalwand 38 oder einer anderen Begrenzung der Ablauföffnung 11 fluchtet und/oder zum Anliegen an eine bevorzugt senkrechte Wandung des Platzhalterteils 46 kommt.

Wenn das Platzhalterteil 46 nach erfolgtem Einbau der Ablaufrinne 4 und/oder der Aufnahme 43 an dem vorgesehenen Ort entfernt ist, wird das Einsatzteil 26 eingesetzt und erfüllt in der beschriebenen Weise dann seine Funktion.

Die Aufnahme 43 weist in den genannten Querschnittsdarstellungen eine Breite in Querrichtung zur Längserstreckung der Ablaufrinne 4 auf, die größer ist als das entsprechende Maß der Ablaufrinne 4. In Längsrichtung der Ablaufrinne 4 kann sie auch kürzer ausgebildet sein.

Übereinstimmend ist bei allen Ausführungsformen der Figuren 15 bis 18 eine Oberseite 48 des Ablauftopfes 9 ebenflächig ausgebildet. Der Adapter 22 kann frei verschoben werden. Er wird an der Verschiebung nicht durch einen aufragenden Rand der Oberseite des Ablauftopfes gehindert.

Im Einzelnen ist die Ebenflächigkeit unterschiedlich erreicht.

Beim Gegenstand der Figur 15 ist das bevorzugt als Blasteil ausgebildete Unterteil des Ablauftopfes oberseitig mit einem ersten Aufsetzteil 49 verbunden, beispielsweise verklebt oder verschweißt. Es kann auch eine insgesamt einstückige Ausbildung vorliegen. Auf diesem Aufsetzteil 49 sitzt weiter oberseitig ein Deckelteil 50 auf. Das Deckelteil 50 ist, wie aus der Querschnittsdarstellung ersichtlich, in einem mittleren Bereich stufenartig abgesenkt. In diesem stufenartig abgesenkten Bereich sitzt ein Einlegeteil 51 ein. Das Einlegeteil 51 ist so ausgebildet, dass es mit dem Flanschbereich des Deckelteils 50 oberseitig ebenflächig abschließt. Eine Verschiebung in Querrichtung wie durch die Pfeile des Adapters 22 angedeutet, ist entsprechend durch den Übergang von dem Einsetzteil 51 zu dem Deckelteil 50 nicht gehindert. Es ist eine durchgehende ebene Oberfläche gegeben.

Bei der Ausführungsform der Figur 16 ist das Deckelteil sogleich mit einer ebenflächig durchgehenden Oberseite ausgebildet. Hierauf ist weiter noch ein Auflageteil 52 angeordnet. Dies erbringt eine weitere Distanzierungsmöglichkeit in Höhenrichtung. Das Auflageteil 52 kann aber auch wegfallen. Im letzteren Fall ist dann der Adapter 22 unmittelbar auf der Oberseite des Deckelteils 50 verschiebbar. Wie schon zu der Ausführungsform der Figur 15 erläutert, ergibt sich hierfür eine Verschiebung des Adapters in Pfeilrichtung, aber auch in einer Querrichtung hierzu, keine Begrenzung durch eine Stufenfläche der Oberseite des Ablauftopfes.

Bei der Ausführungsform der Figur 17 ist im Prinzip eine gleiche Gestaltung gegeben wie bei der Ausführungsform der Figur 16. Nur ist die Oberfläche des Deckelteils 50 hier durch die Oberseite (Stirnfläche) von vertikal gerichteten Rippen 53 gegeben, von denen eine entsprechende Mehrzahl in Längsrichtung der Ablauföffnung 11 nebeneinander ausgebildet sind.

Auch hier kann noch ein Auflegeteil 52 aufgesetzt sein, entsprechend der Darstellung Figur 16.

Bei der Ausführungsform der Figur 17 ist beispielhaft dargestellt, dass die Rinne 4 nicht unmittelbar an dem Adapter 22 gehaltert ist, sonder vermittels der Aufnahme 43. Die Aufnahme 43 ist hier zwar geometrisch gleich zu dem Teil dargestellt, das beispielsweise in den Figuren 15 und 16 als Rinne 4 bezeichnet ist. Es hat jedoch ersichtlich eine andere Funktion. Die Aufnahme 43 erbringt den Formschluss zu dem Adapter 22, konkret zu dem Durchflusskragen 63. Die Ausgestaltung der Figur 17 kann vorteilhaft sein, wenn eine Rinne 4 benutzt werden soll, die nicht an den Adapter 22 in der beschriebenen Weise angepasst ist.

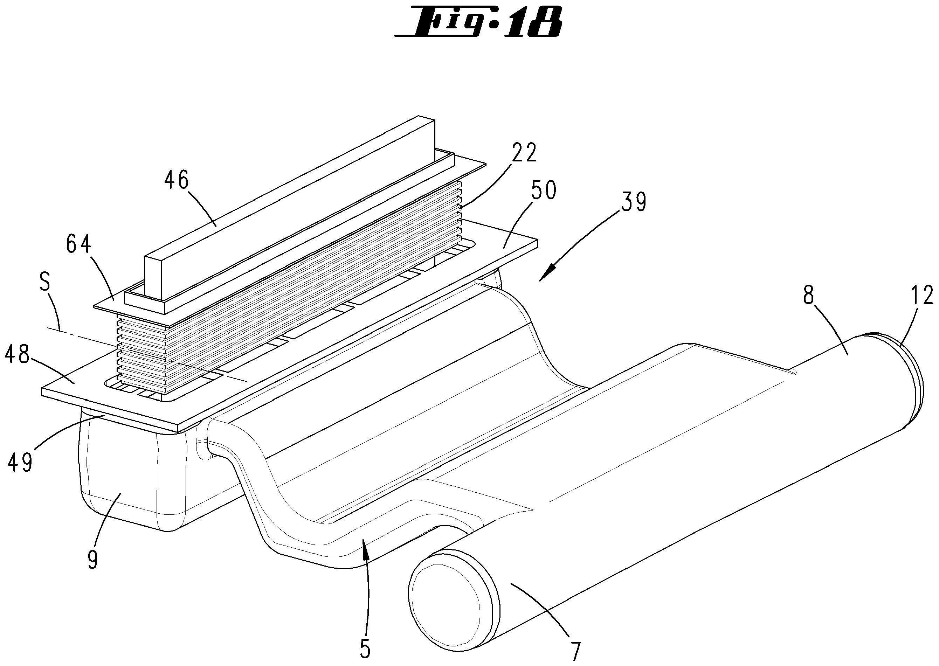

Die perspektivische Darstellung der Figur 18 erläutert weiter die Gestaltung der Figur 17. Die Rippenausformungen sind ersichtlich.

Auch bei der Ausführungsform gemäß Figur 18 ist noch das Platzhalterteil 46 vorgesehen.

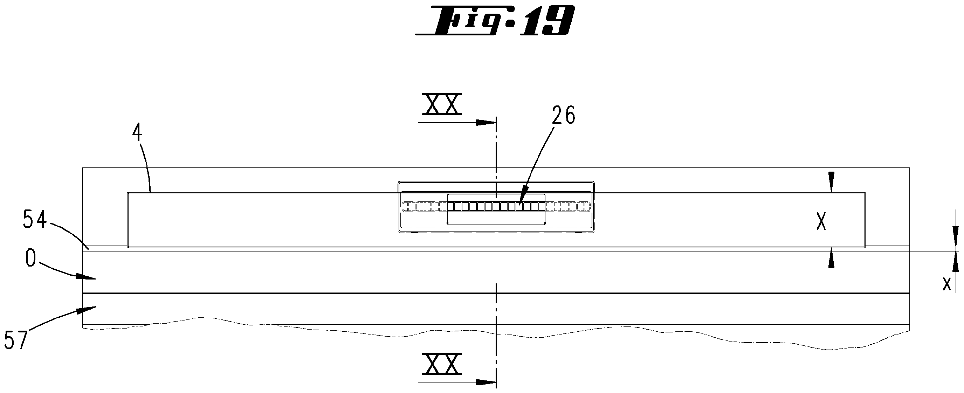

Mit Bezug insbesondere zu den Figuren 19 bis 21 ist die Absenkbarkeit der Aufnahme für die Ablaufrinne und damit auch der Ablaufrinne selbst, sowie ein günstig vorgesehenes Einlegeteil zur Abdeckung des Geruchsverschlusses weiter erläutert.

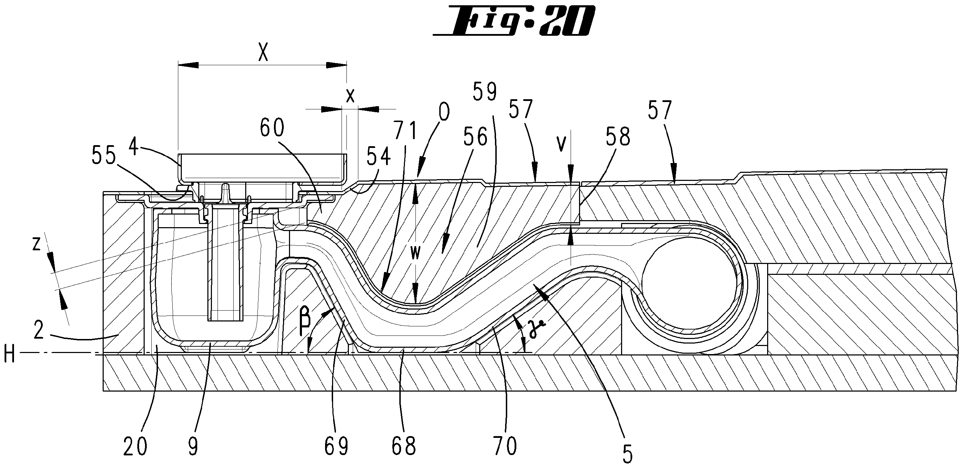

Figur 20 zeigt eine Schnittdarstellung durch das Duschbodenelement entsprechend der Teildarstellung in Figur 19.

Hierbei ist ersichtlich, dass die Ablaufrinne 4 zufolge des in der Oberseite O ausgebildeten Bereiches 54 größeren Gefälles soweit abgesenkt angeordnet werden kann, dass eine Unterseite 55 der Ablaufrinne 4, wobei die Ablaufrinne 4 auch durch die Aufnahme 43 sogleich ersetzt sein kann, sich unterhalb einer angrenzenden Oberfläche O des Bereiches 56 geringeren Gefälles befindet. Im Einbauzustand ist der eventuell verbleibende Zwickel zwischen der Unterseite 55 und der Oberseite O des Duschbodenelementes angrenzend an und unterhalb der Ablaufrinne 4 (oder ggf. sogleich der Aufnahme 43) mit Fliesen und/oder Fliesenkleber gefüllt.

Während der Bereich 56 ein Gefälle von bspw. 0,5 bis 4° aufweist, weist der Bereich 54 ein Gefälle von bspw. 10 bis 60° bevorzugt auf.

Eine Breite x des Bereiches 54 größeren Gefälles beträgt beim Ausführungsbeispiel etwa 1/10 der Breite X der Ablaufrinne 4 (oder der Aufnahme 43).

Der Bereich 54 größeren Gefälles 54 ist ersichtlich näher zu der Aufnahme 43 bzw. der Ablaufrinne 4 angeordnet als der Bereich 56 geringeren Gefälles.

Das Gefälle erstreckt sich auch quer zu einer Längserstreckung der Ablaufrinne 4 bzw. der Aufnahme 43.

In dem Bereich 54 geringeren Gefälles sind noch geringere Einsenkungen 57 ausgebildet, die angrenzend an eine Trennfuge 58 zwischen zwei Teilstücken, die zum Gesamt-Duschbodenelement zusammengesetzt werden, sich befinden. Diese dienen dazu, ein übergreifendes Dichtband aufzunehmen, dessen Oberfläche sich dann im Wesentlichen wieder in die Gefällefläche des zweiten Bereiches 56 einpasst und wieder zu einer einheitlich ebenflächig verlaufenden Oberfläche (im Wesentlichen) führt. Die Oberfläche O dient als Ausgangsfläche für beispielsweise eine nachfolgende Verfliesung.

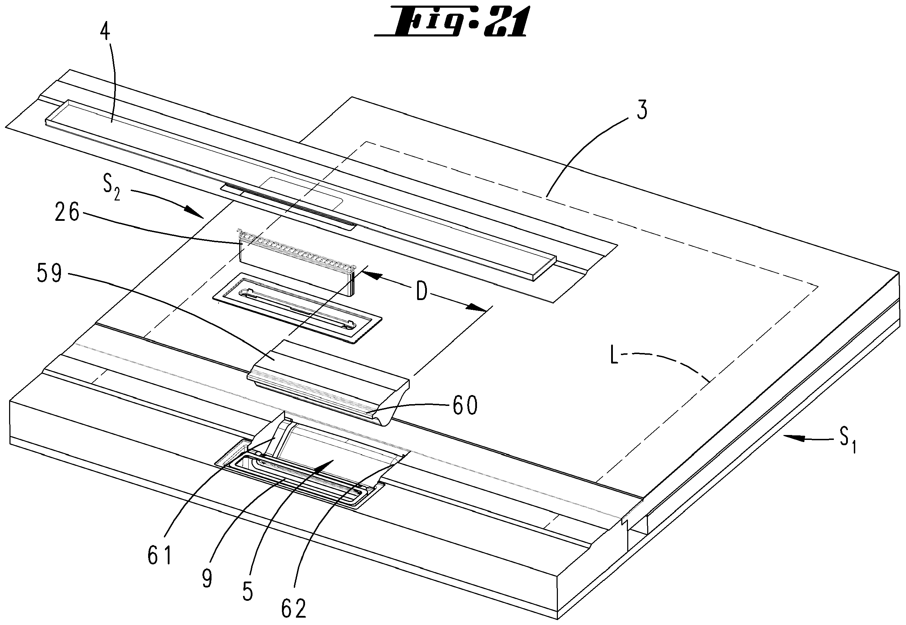

Wie sich auch in Zusammenschau mit Figur 21 ergibt, kann eine Einsenkung 57 auch - zunächst auch: nur - an zwei gegenüberliegenden und/oder zwei winklig, insbesondere rechtwinklig zueinander verlaufenden Randseiten, beispielsweise den Randseiten S₁ und S₂ eines Duschbodenelementes 1 bzw. eines Teilelementes 3 (oder abweichend von dem Ausführungsbeispiel an einem Duschbodenelement insgesamt) vorgesehen sein. Darüber hinaus und bevorzugt, wenn, wie im Ausführungsbeispiel der Figur 20 beispielsweise, zwei Teile zusammengesetzt sind, an der Randkante, welche der Trennfuge zu dem angesetzten Teil zugeordnet ist, wie auch in Figur 20 im Einzelnen dargestellt. Darüber hinaus kann die Absenkung auch an einem Duschbodenelement bzw. einem Teil 3 eines Duschbodenelementes 1, wie durch die gestrichelte Linie L in Figur 21 auch angedeutet, umlaufend ausgebildet sein. Wie erläutert, ist die Absenkung bevorzugt nur in einer solchen Tiefe vorgesehen, dass sie durch Aufnahme eines Dichtbandes, das beispielsweise eine Dicke von 0,5mm bis 2mm aufweisen kann und zugehörigem Verbindungsmittel wie insbesondere Fliesenkleber, ausgefüllt wird, derart, dass zu dem anschließenden (inneren) Oberflächenbereich des Duschbodenelementes praktisch keine Stufe entsteht.

Von Bedeutung ist weiterhin das in den Figuren 20 und 21 ersichtliche Schaumstoff-Abdeckteil 59. Das Schaumstoff-Abdeckteil 59 ist unterseitig an den konkaven Verlauf des Geruchsverschlusses 5 angepasst. Andererseits bildet es oberseitig einen Teil der Oberfläche O, und zwar ein solcher Teil der Oberfläche O, auf dem bevorzugt auch die Bereiche 54 und 56 unterschiedlichen Gefälles ausgebildet sind.

Im Querschnitt ergibt sich zugeordnet der Ablaufrinne 4 und/oder der Aufnahme 43 ein Nasenabschnitt 60, der eine Dicke z aufweist, die einem 1/10 bis 1/3 der größten Dicke w des Schaumstoff-Abdeckteils 59 entspricht.

Auch gegenüberliegend, wiederum bezogen auf die Querschnittsdarstellung, ergibt sich eine Verjüngung, die auslaufend mit einer Dicke v ausgebildet ist, die bevorzugt größer ist als die Dicke z des Nasenabschnittes 60, aber auch im Bereich von 1/4 bis 2/3 der größten Dicke w liegen kann.

Wandseitig, wie sich insbesondere aus Figur 21 ergibt, sind in dem Duschbodenelement an den Verlauf der unteren Randkontur (Querschnittsdarstellung) angepasst verlaufende Auflageabschnitte 61, 62 innerhalb des Duschbodenelementes ausgebildet, auf denen das im Übrigen bevorzugt bzgl. der Querschnittsdarstellung in Figur 20 mit gleichem Querschnitt durchgehend über die Breite ausgebildete Schaumstoff-Abdeckteil randseitig im Einbauzustand aufliegt. Hierüber erfolgt bevorzugt die gesamte Lastabstützung, so dass der Bereich der Abflussleitung, der Geruchsverschluss 5, nicht belastet wird.

Hinsichtlich seiner quer zur Durchströmungsrichtung des Geruchsverschlusses 5 gegebenen Breitenerstreckung ist das Schaumstoff-Abdeckteil 59 entsprechend an die Breite des Geruchsverschlusses 5 in diesem Bereich angepasst. Weiter bevorzugt ist es etwas größer als die Breite des Geruchsverschlusses in diesem Bereich. Etwa 1/20 bis 1/3 der Breite des Geruchsverschlusses größer. Bezüglich des dargestellten zweiteiligen Duschbodenelementes ist auch bevorzugt, dass das Schaumstoff-Abdeckteil 59 sich nur in dem einen der beiden Teile befindet, und zwar unmittelbar zugeordnet der Ablaufrinne 4 bzw. der Aufnahme 43. Hinsichtlich der Ausgestaltung der Bereiche größeren und kleineren Gefälles im Einzelnen, wie es auch bei dem Schaumstoff-Abdeckteil 59 verwirklicht ist, wird auf vorstehende Ausführungen verwiesen.

Das Schaumstoff-Abdeckteil 59 ist weiter bevorzugt auch aus einem Partikelschaumstoff, insbesondere wie vorstehend auch weiter spezifiziert, gebildet. Hierbei kann aber eine höhere Dichte aus dem angegebenen Bereich verwendet sein als bei dem Duschbodenelement im Übrigen.

In Bezug auf Fig. 20 seien auch die Winkel im Bereich des Geruchsverschlusses wie folgt erläutert.

Bezogen auf eine Horizontale H in welcher sich in der in Fig. 20 dargestellten Einbaulage ersichtlich auch ein Unterbodenabschnitt 68 der Ablaufleitung zwischen einem Abstiegsbereich 69 und einem Anstiegsbereich 70 erstreckt, ist ein Winkel β von ca. 60°, beim Ausführungsbeispiel speziell 61°, eingeschlossen. Zwischen dem Unterbodenbereich im Bereich des Anstiegabschnittes 70 und der genannten Horizontalen ist ein Winkel γ eingeschlossen, der ca. 35°, beim Ausführungsbeispiel exakt 35°, entspricht.

Beim Ausführungsbeispiel verläuft auch der Oberboden 71 in dem entsprechenden Abstiegs- bzw. Anstiegsbereich mit einem gleichen Winkel. Entsprechend verläuft auch eine Mittellinie mit gleichem Winkel.

**Bezugszeichenliste**

| | | | |
|---|---|---|---|
| 1 | Duschbodenelement | 26 | Einsatzteil |
| 2 | Teilelement | 27 | Dichtung |
| 3 | Teilelement | 28 | Gitterelement |
| 4 | Ablaufrinne | 29 | Einzelöffnung |
| 5 | Geruchsverschluss | 30 | Deckelabschnitt |
| 6 | Leitungsteil | 31 | Vertikalwand |
| 7 | Leitungsabschnitt | 32 | Horizontalsteg |
| 8 | Leitungsabschnitt | 33 | Zwischenwand |
| 9 | Ablauftopf | 34 | Ausflussöffnung |
| 10 | Oberseite | 35 | Decke |
| 11 | Ablauföffnung | 36 | Wangenabschnitt |
| 12 | Stirnseite | 37 | Dichtungsaufnahme |
| 13 | Stirnseite | 38 | Vertikalwand |
| 14 | Schmalseite | 39 | Mündung |
| 15 | Teilabschnitt | 40 | Boden-Strömungshindernis |
| 16 | Füllelement | 41 | Boden-Strömungshindernis |
| 17 | Einbuchtung | 42 | Leitungsdecke |
| 18 | Stirnfläche | 43 | Aufnahme |
| 19 | Stirnfläche | 44 | Rost |
| 20 | Aufnahme | 45 | Auslauföffnung |
| 21 | Absatzfläche | 46 | Platzhalterteil |
| 22 | Adapter | 47 | Innenfläche |
| 23 | horizontale Absatzfläche | 48 | Oberseite |
| 24 | Verbindungsabschnitt | 49 | Aufsetzteil |
| 25 | V-Einbuchtung | 50 | Deckteil |
| | | | |
| 51 | Einlegeteil | α | Winkel |
| 52 | Auflageteil | a | Kammer |
| 53 | Rippen | b | Kammer |
| 54 | Bereich | c | Kammer |
| 55 | Unterseite | B | Breite |
| 56 | Bereich | D | Breite |
| 57 | Einsenkung | E | Erstreckungsrichtung |
| 58 | Trennfuge | H | Horizontale |
| 59 | Schaumstoff-Abdeckteil | M | Mittelachse |
| 60 | Nasenabschnitt | O | Oberseite der Bereiche (54 und 56) |
| 61 | Auflageabschnitt | S | Solltrennebene |
| 62 | Auflageabschnitt | x | Breite |
| 63 | Durchflusskragen | X | Breite |
| 64 | Flansch | z | Dicke |
| 65 | Verbreiterung | w | Dicke |
| 66 | Anschlusshindernis | v | Dicke |
| 67 | Solltrennlinie | S₁ | Randseite |
| 68 | Unterbodenabschnitt | S₂ | Randseite |
| 69 | Abstiegsbereich | L | Linie |
| 70 | Anstiegsbereich | | |
| 71 | Oberboden | | |

## Patentansprüche

1. Duschbodenelement (1) mit einer Ablaufleitung, einem Geruchsverschluss (5) und einem Ablauftopf (9), insbesondere in Zuordnung des Ablauftopfes (9) zu einer Ablaufrinne (4) und/oder zu einer Aufnahme (43) für eine Ablaufrinne (4), oder einer diesbezüglichen Öffnung, wobei der Geruchsverschluss (5) zumindest teilweise außerhalb des Ablauftopfes (9) oder einer vertikalen Projektion der Ablaufrinne (4) beziehungsweise der Aufnahme (43) hierfür angeordnet ist, wobei weiter der Ablauftopf (9) mit einer größeren Länge als Breite ausgebildet ist und der Geruchsverschluss (5) durch mindestens einen, höhenmäßig ansteigenden Leitungsabschnitt gebildet ist, wobei dieser Leitungsabschnitt eine Breite aufweist, welche die Breite des Ablauftopfes (9) übertrifft, **dadurch gekennzeichnet, dass** die im Anschluss an den Geruchsverschluss (5) vorgesehene Ablaufleitung bzw. ein diesbezüglicher Leitungsabschnitt (7, 8) in einer Draufsicht mit einer Erstreckungsrichtung in einem rechten oder spitzen Winkel zur Durchflussrichtung des Geruchsverschlusses angeordnet ist und dass der Geruchsverschluss (5) über eine sich in einer Längserstreckung der Ablaufleitung (7, 8) erstreckende Mündung in die Ablaufleitung (7, 8) übergeht, wobei eine Öffnung der Mündung in Längserstreckung der Ablaufleitung (7, 8) größer ist als ein Durchmesser der Ablaufleitung (7, 8).

2. Duschbodenelement nach Anspruch 1, **dadurch gekennzeichnet, dass** bezogen auf eine Draufsicht die Ablaufleitung sich mit einer Erstreckungsrichtung quer zur Durchflussrichtung des Geruchsverschlusses (5) beidseitig des Geruchsverschlusses (5) erstreckt.

3. Duschbodenelement nach einem der vorhergehenden Ansprüche, **dadurch gekennzeichnet, dass** Leitungsabschnitte (7, 8) der Ablaufleitung zwei entgegengesetzt verlaufende und an dem Ausgang des Geruchsverschlusses (5) ansetzende Leitungsabschnitte sind.

4. Duschbodenelement nach Anspruch 3, **dadurch gekennzeichnet, dass** beide Leitungsabschnitte herstellungsmäßig verschlossen sind.

5. Duschbodenelement nach einem der Ansprüche 1 bis 3, **dadurch gekennzeichnet, dass** der Leitungsabschnitt (7, 8) ein Anschlusshindernisteil (66) aufweist.

## Claims

1. Shower-base element (1) comprising a drainage line, an odour trap (5) and a drain pot (9), in particular for assigning the drain pot (9) to a drain channel (4) and/or to a receptacle (43) for a drain channel (4), or to an opening corresponding thereto, the odour trap (5) being arranged at least partly outside the drain pot (9) or a vertical projection of the drain channel (4) or the receptacle (43) therefor, the length of the drain pot (9) also being greater than its width and the odour trap (5) being formed by at least one line portion which rises in height, said line portion having a width that exceeds the width of the drain pot (9), **characterised in that**, when viewed from above, the drainage line, or a line portion (7, 8) corresponding thereto, which is provided so as follow on from the odour trap (5), is arranged having an extension direction at a right or acute angle to the direction of flow through the odour trap, and **in that** the odour trap (5) transitions into the drainage line (7, 8) via an outlet extending in a longitudinal extension of the drainage line (7, 8), an opening of the outlet in the longitudinal extension of the drainage line (7, 8) being larger than a diameter of the drainage line (7, 8).

2. Shower-base element according to claim 1, **characterised in that**, when viewed from above, the extension direction of the drainage line extends transversely to the direction of flow through the odour trap (5) on both sides of the odour trap (5).

3. Shower-base element according to any of the preceding claims, **characterised in that** line portions (7, 8) of the drainage line are two line portions which extend counter to one another and are attached to the output of the odour trap (5).

4. Shower-base element according to claim 3, **characterised in that** the two line portions are closed during production.

5. Shower-base element according to any of claims 1 to 3, **characterised in that** the line portion (7, 8) has a connection-blocking part (66).

## Revendications

1. Elément de sol de douche (1) avec une conduite d'évacuation, un siphon (5) et une cuvette d'évacuation (9), en particulier pour association de la cuvette d'évacuation (9) à une rigole d'évacuation (4) et/ou une structure d'accueil (43) pour une rigole d'évacuation (4), ou une ouverture correspondante, dans lequel le siphon (5) est agencé au moins partiellement à l'extérieur de la cuvette d'évacuation (9) ou d'une saillie verticale de la rigole d'évacuation (4) par rapport à la structure d'accueil (43) de celle-ci, dans lequel en outre la cuvette d'évacuation (9) est formée avec une plus grande longueur que largeur, et le siphon (5) est formé par au moins une section de conduite d'une hauteur accrue, dans lequel cette section de conduite présente une largeur qui est supérieure à la largeur de la cuvette d'évacuation (9), **caractérisé en ce que** la conduite d'évacuation prévue à la suite du siphon (5) ou une section de conduite correspondante (7, 8), dans une vue de dessus, est agencée avec une direction d'extension selon un angle droit ou aigu par rapport à la direction d'écoulement du siphon, et **en ce que** le siphon (5), par l'intermédiaire d'une embouchure s'étendant dans une extension longitudinale de la conduite d'évacuation (7, 8), passe dans la conduite d'évacuation (7, 8), dans lequel une ouverture de l'embouchure selon l'extension longitudinale de la conduite d'évacuation (7, 8) est plus grande qu'un diamètre de la conduite d'évacuation (7, 8).

2. Elément de sol de douche selon la revendication 1, **caractérisé en ce que**, par rapport à une vue de dessus, la conduite d'évacuation s'étend des deux côtés du siphon (5) avec une direction d'extension qui est transversale à la direction d'écoulement du siphon (5).

3. Elément de sol de douche selon l'une des revendications précédentes, **caractérisé en ce que** des sections de conduite (7, 8) de la conduite d'évacuation sont deux sections de conduite s'étendant en directions opposées et agencées à la sortie du siphon (5).

4. Elément de sol de douche selon la revendication 3, **caractérisé en ce que** les deux sections de conduite sont fermées de par la fabrication.

5. Elément de sol de douche selon l'une des revendications 1 à 3, **caractérisé en ce que** la section de conduite (7, 8) présente une partie d'obstacle à la connexion (66).
